Europäisches Patentamt

European Patent Office

Office européen des brevets

(19)

(11) Veröffentlichungsnummer: **0 063 298**
**B1**

(12) **EUROPÄISCHE PATENTSCHRIFT**

(45) Veröffentlichungstag der Patentschrift:
**22.02.84**

(51) Int. Cl.³: **C 07 C 97/24** // C09B1/28

(21) Anmeldenummer: **82102884.2**

(22) Anmeldetag: **05.04.82**

(54) Verfahren zur Herstellung von 1-Alkylaminoanthrachinonen.

(30) Priorität: **16.04.81 DE 3115548**

(43) Veröffentlichungstag der Anmeldung:
**27.10.82 Patentblatt 82/43**

(45) Bekanntmachung des Hinweises auf die Patenterteilung:
**22.02.84 Patentblatt 84/8**

(84) Benannte Vertragsstaaten:
**CH DE FR GB LI**

(56) Entgegenhaltungen.
**EP - A - 0 001 249**
**FR - A - 2 357 531**

**CHEMICAL ABSTRACTS, Band 83, Nr. 14, 7. Oktober 1975, Seite 159, Nr. 116959n, Columbus, Ohio, USA**

(73) Patentinhaber: **BAYER AG, Zentralbereich Patente, Marken und Lizenzen, D-5090 Leverkusen 1, Bayerwerk (DE)**

(72) Erfinder: **Reubke, Karl-Julius, Dr., Rybniker Strasse 10, D-5000 Köln 80 (DE)**

EP 0 063 298 B1

## Verfahren zur Herstellung von 1-Alkylaminoanthrachinonen

Die Erfindung betrifft ein verbessertes Verfahren zur Herstellung von 1-Alkylamino-anthrachinonen durch Aminolyse von 1-Nitroanthrachinonen mit Alkylaminen.

Verfahren zur Herstellung von 1-Alkylamino-anthrachinonen durch Aminolyse von 1-Nitroanthrachinonen sind bekannt (siehe z. B. die DE-PS 144 634, DE-PS 136 777, die CH-PS 478 185, die US-PS 4 163 747 und die japanische bekanntgemachte Anmeldung 75-63 017, referiert in Chemical Abstracts, Vol. 83 [1975], No. 116 959 n). In diesen bekannten Verfahren werden die Alkylamine, um eine möglichst vollständige Umsetzung der 1-Nitroanthrachinone zu erreichen, in zum Teil erheblichen Überschüssen angewendet. In der japanischen Anmeldung 75-63 017 wird auch auf die Möglichkeit hingewiesen, andere Säurebindemittel als die Alkylamine einzusetzen. Genannt werden Alkalicarbonate, -hydroxide und -acetate.

Alle diese bekannten Verfahren haben jedoch den schwerwiegenden Nachteil, daß bei ihnen entweder bei der Aminolyse oder aber während der Aufarbeitung der Reaktionsgemische oder im Abwasser Dialkylnitrosamine entstehen. Da diese Nitrosamine sich als stark toxische Verbindungen erwiesen haben, bestand daher die technische Aufgabe, ein Verfahren zur Herstellung von 1-Alkylamino-anthrachinonen durch Aminolyse von 1-Nitroanthrachinonen mit Alkylaminen aufzufinden, das die 1-Alkylamino-anthrachinone nicht nur in hohen Ausbeuten und den erforderlichen guten Qualitäten liefert, sondern bei dem auch in keiner Verfahrensstufe der Herstellung Nitrosamine auftreten.

Es wurde nun gefunden, daß man 1-Alkylamino-anthrachinone durch Aminolyse von 1-Nitroanthrachinonen mit Alkylaminen in hohen Ausbeuten und vorzüglicher Reinheit herstellen kann, ohne daß in irgendeinem Stadium der Herstellung Nitrosamine entstehen, wenn man die Aminolyse der 1-Nitroanthrachinone in Gegenwart von Calciumhydroxid ausführt.

Die Erfindung betrifft daher ein Verfahren zur Herstellung von 1-Alkylamino-anthrachinonen durch Aminolyse von 1-Nitroanthrachinonen mit Alkylaminen bei erhöhter Temperatur in Wasser und organischen, mit Wasser nicht mischbaren Lösungsmitteln in Gegenwart von Säurebindemitteln, das dadurch gekennzeichnet ist, daß man als Säurebindemittel Calciumhydroxid verwendet.

Die erfindungsgemäße Verwendung von Calciumhydroxid als Säurebindemittel ermöglicht 1. bei der Aminolyse auf die Verwendung eines größeren Amin-Überschusses zu verzichten und statt dessen mit nahezu stöchiometrischen Mengen an Alkylaminen zu arbeiten und auf diese Weise die Menge an möglichen Nitrosamin-Bildnern wesentlich herabzusetzen; 2. läßt sich das aus dem Calciumhydroxid entstehende Calciumnitrit, im Gegensatz zu den mit anderen Säurebindemitteln, z. B. Natriumcarbonat, entstehenden Nitriten, überraschenderweise durch Kochen mit Ammoniumsalzen glatt und ohne Bildung von Nitrosaminen zu Stickstoff, Wasser und Calciumsalzen der den Ammoniumsalzen zugrunde liegenden Säuren umsetzen.

Das Calciumhydroxid wird in Mengen von 1 bis 5 Äquivalenten je Mol 1-Nitroanthrachinon eingesetzt.

Die Alkylamine werden in Mengen von 1 bis 1,5 Mol, vorzugsweise 1,05 bis 1,2 Mol je Mol 1-Nitroanthrachinon angewendet.

Die Zersetzung des bei der Aminolyse gebildeten Calciumnitrits zu Stickstoff, Wasser und Calciumsalzen der den zum Zersetzen verwendeten Ammoniumsalze zugrunde liegenden Säuren wird vorteilhaft in der Weise vorgenommen, daß man das nach beendeter Aminolyse vorliegende Reaktionsgemisch nach Zugabe von Ammoniumsalzen so lange auf Rückflußtemperatur erwärmt, bis in der Reaktionsmischung kein Nitrit mehr nachweisbar ist.

Als Ammoniumsalze verwendet man vorteilhaft die Ammoniumsalze solcher Säuren, die mit Calcium wasserlösliche Salze bilden, z. B. Ammoniumchlorid, -formiat, -acetat, -benzoat. Die Ammoniumsalze können auch im Reaktionsgemisch durch Zugabe von Ammoniak und der entsprechenden Säuren erzeugt werden.

Die Ammoniumsalze werden in mindestens äquivalenter Menge zur angewendeten Menge Calciumhydroxid eingesetzt; im allgemeinen setzt man 2 bis 6 Äquivalente Ammoniumsalz je Mol angewendeten Calciumhydroxids ein.

In dem erfindungsgemäßen Verfahren können auf beliebige Weise hergestellte 1-Nitroanthrachinone eingesetzt werden. Da die Reinheit der erfindungsgemäß hergestellten 1-Alkylaminoanthrachinone jedoch wesentlich durch die Reinheit der verwendeten 1-Nitroanthrachinone bestimmt wird, empfiehlt es sich, möglichst reine 1-Nitroanthrachinone zu verwenden. Vorzugsweise wird als Ausgangsprodukt 1-Nitro-anthrachinon verwendet. Es sind jedoch auch substituierte 1-Nitro-anthrachinone, wie beispielsweise 1-Nitro-5- bzw. -8-hydroxy- und 1-Nitro-5- bzw. -8-Chloranthrachinon einsetzbar.

Unter Alkylaminen sind im Rahmen des erfindungsgemäßen Verfahrens aliphatische, cycloaliphatische und araliphatische Amine zu verstehen. Als aliphatische Alkylamine seien vor allem Amine mit einem $C_1-C_{18}$-, vorzugsweise $C_1-C_6$-Alkylrest genannt. Diese Alkylreste können gegebenenfalls durch Halogen, Hydroxy, Alkoxy, Dialkylamino oder Cyan substituiert sein. Als Beispiele für solche gegebenenfalls substituierten $C_1-C_{18}$-Alkylreste seien genannt: Methyl, Ethyl, n-Propyl, iso-Propyl, n-, iso- oder tert.-Butyl, n-, iso- oder tert.-Amyl, n- oder iso-Hexyl, n-Dodecyl, $\beta$-Chlorethyl, $\beta,\beta,\beta$-Trifluorethyl, $\beta,\gamma$-Dichlorpropyl, $\beta$-Cyanoethyl, $\beta$-Cyanoethoxyethyl, $\beta$-Methoxyethyl, Methoxybutyl, $\beta$-Hydro-

xyethyl, β,γ-Hydroxypropyl, β-Diethylaminoethyl, γ-Dimethylamino-propyl.

Als cycloaliphatische Alkylamine seien vor allem Amine mit $C_5$-$C_8$-Cycloalkylresten genannt. Diese Cycloalkylreste können durch $C_1$-$C_4$-Alkyl, Hydroxy, $C_1$-$C_4$-Alkoxy, $C_1$-$C_4$-Dialkylamino, Chlor oder Brom substituiert sein.

Als araliphatische Alkylreste seien beispielsweise der Benzyl-, β-Phenylethyl-, γ-Phenylpropyl-, γ-Phenyl-α-methyl-propyl-, γ-Phenyl-α,γ,γ-Trimethylpropyl-, α-Isopropyl-γ-phenylpropyl-, α-Cyclohexyl-γ-phenylpropyl- und α-(β-Phenylethyl)-γ-methylbutyl-Rest genannt.

Als organische, mit Wasser nicht mischbare Lösungsmittel werden vorzugsweise solche verwendet, deren Siedepunkt über 80°C liegt. Als Beispiele solcher Lösungsmittel seien genannt: Aliphatische, cycloaliphatische und aromatische Kohlenwasserstoffe, Halogenkohlenwasserstoffe und durch eine Nitrogruppe substituierte aromatische Kohlenwasserstoffe. Als Beispiele für diese Stoffgruppen seien genannt: Gesättigte alipatische $C_7$-$C_{18}$-Kohlenwasserstoffe und deren Gemische, Cyclohexan, Perchlorethylen, Benzol, Toluol, Xylol, Methylnaphthalin, Chlorbenzol, Chlornaphthalin, Dichlor- und Trichlorbenzol, ferner Nitrobenzol und Nitrotoluol.

Da organische Lösungsmittel, deren Siedepunkt oberhalb der Temperatur liegt, bei der man die Aminolyse durchführen will, bevorzugt sind, richtet sich die Wahl des organischen Lösungsmittels nach den beabsichtigten Arbeitstemperaturen. Bevorzugt werden als Lösungsmittel Toluol und Xylol verwendet.

Das Verhältnis Wasser : organisches Lösungsmittel kann in weiten Grenzen schwanken; im allgemeinen liegt das Verhältnis zwischen 1 : 10 und 10 : 1, vorzugsweise 2 : 1 und 8 : 1.

Um ein Entweichen der Amine bei der Reaktion zu vermeiden, wird das erfindungsgemäße Verfahren in einem geschlossenen Gefäß durchgeführt. Die Ausgangsverbindungen können in diesem Reaktionsgefäß vorgelegt und gemeinsam auf Reaktionstemperatur erwärmt werden; es können aber auch Nitroanthrachinon, Säurebindemittel und organisches Lösungsmittel vorgelegt und auf Reaktionstemperatur erwärmt und erst dann die wäßrige Aminlösung zugepumpt werden.

Die Reaktionstemperatur liegt im allgemeinen zwischen 80 und 120°C. Die Reaktionstemperatur wird vorteilhaft so gewählt, daß sie über der Siedetemperatur des verwendeten Amins bzw. des Wassers liegt, so daß bei Drücken zwischen 0,1 und 3 bar gearbeitet wird.

Nach Beendigung der Aminolysereaktion wird das Reaktionsgemisch mit dem Ammoniumsalz oder einer Mischung aus Ammoniak und der betreffenden Säure versetzt und das Reaktionsgemisch anschließend so lange auf Rückflußtemperatur erwärmt, bis kein Nitrit in der Lösung mehr nachweisbar ist. Zur Beschleunigung der Zersetzung des Calciumnitrats kann während des Verkochens die dem verwendeten Ammoniumsalz zugrunde liegende Säure nachdosiert werden.

Die Aufarbeitung des so erhaltenen Reaktionsgemisches erfolgt vorteilhaft in der Weise, daß man zunächst das Lösungsmittel zusammen mit Wasser abdestilliert und anschließend das 1-Alkylamino-anthrachinon durch Filtration in üblicher Weise abtrennt. Das abdestillierte Lösungsmittel/Wasser-Gemisch kann für die nächste Umsetzung wiederverwendet werden. Die erfindungsgemäß hergestellten 1-Alkylamino-anthrachinone fallen in hoher Ausbeute und in solch vorzüglicher Qualität an, daß sie unmittelbar als Farbstoff oder zu anderweitiger Weiterverarbeitung verwendbar sind.

Eine bevorzugte Ausführungsform des erfindungsgemäßen Verfahrens sei anhand der Herstellung von 1-Methylamino-anthrachinon erläutert: 1-Nitroanthrachinon, Wasser, Xylol, gelöschter Kalk und Methylamin (100%ig oder in Form einer wäßrigen Lösung) werden in einem druckdicht verschlossenen Rührwerksbehälter auf 95 bis 110°C erwärmt und 15 bis 24 Stunden bei dieser Temperatur gerührt. Der Druck fällt dabei von anfänglich 1 bis 2,5 bar auf 0,5 bis 1,5 bar. Nach beendeter Analyse läßt man das Reaktionsgemisch etwas abkühlen, gibt Ammoniumchlorid oder eine Mischung aus äquivalenten Mengen Essigsäure und wäßriger Ammoniaklösung zu und erwärmt die Mischung so lange unter Rückfluß, bis eine Probe der Mischung keine Nitritreaktion mehr zeigt (Dauer 3 bis 8 Stunden). Anschließend wird, gegebenenfalls nach Ansäuern mit Salzsäure, das Xylol zusammen mit Wasser abdestilliert, wobei der Reaktionsmischung vorteilhaft eine der abdestillierten Wassermenge entsprechende Wassermenge zugesetzt wird. Die Destillation kann jedoch auch durch Einleiten von Dampf erfolgen. Sobald alles Xylol abdestilliert ist, wird das 1-Methylamino-anthrachinon abgesaugt und mit Wasser gewaschen.

1-Alkylamino-anthrachinone, beispielsweise 1-Methylamino- und 1-Isopropylamino-anthrachinon, sind wichtige Farbstoffe zum Anfärben von Kunststoffen in der Masse (1-Methylamino-anthrachinon wird als Disperse Red 9 bzw. als Solvent Red 111 unter der Formel Nr. 60 505 im Colour Index geführt). Ferner dienen Alkylamino-anthrachinone als Zwischenprodukte für die Herstellung von Säurefarbstoffen (s. Ullmanns Enzyklopädie der technischen Chemie, 4. Auflage, Band 7, Seite 641).

Beispiel 1

In einem 150 l fassenden Kessel werden 25,2 l Wasser, 6,85 l Xylol, 6,85 kg (= 27 Mol) 1-Nitroanthrachinon und 1,99 kg (= 27 Mol) Weißkalkhydrat [Ca(OH)$_2$] und 3,0 kg (= 29 Mol) wäßrige, 30%ige Methylaminlösung nach Verschließen des Kessels auf 105°C erhitzt. Dabei steigt der Druck auf 1,5 bis 2,0 bar. Im Verlauf der 20stündigen Reaktionszeit fällt der Druck wieder auf 1,1 bis 1,3 bar ab. Dann läßt man auf etwa 80° C abkühlen und setzt 6,85 kg (=128 Mol) Ammoniumchlorid zu. Man erhitzt das Reaktionsgemisch auf Rückflußtemperatur und läßt gleichzeitig konzentrierte Salzsäure durch den Rückflußkühler zulaufen. Der pH-Wert des Reaktionsgemisches geht dabei langsam von anfänglich 7 bis 8 (nach der Zugabe von Ammoniumchlorid) auf 4 bis 5 zurück. Die Stickstoffentwicklung setzt ganz allmählich ein. Durch das Zutropfen der Salzsäure während der ersten Verkochungsphase wird verhindert, daß zuviel Ammoniak entweicht. Sobald eine kräftigere Gasentwicklung eingesetzt hat, wird die Säurezugabe beendet. Nach 5 Stunden ist die Gasentwicklung (Stickstoffentwicklung) beendet. Man läßt 3 Stunden weiterkochen und destilliert dann Xylol und Wasser ab. Um zu verhindern, daß die Suspension während des Abdestillierens zu stark aufkonzentriert wird, wird das abdestillierende Wasser durch frisches Wasser ersetzt. Das abdestillierende Wasser/ Xylol-Gemisch wird für den nächsten Ansatz wiederverwendet.

Anschließend wird das 1-Methylamino-anthrachinon bei 80° C abgesaugt und mit 100 l heißem Wasser gewaschen. Nach Trocknen bei 80° C erhält man 6,3 kg 1-Methylamino-anthrachinon (97- bis 98%ig) entsprechend einer Ausbeute von 96 bis 97% der Theorie.

In keiner Phase des Herstellungsverfahrens sind Nitrosamine innerhalb der Nachweisgrenze von 1 ppm nachweisbar.


Beispiel 2

In einen 0,7 l fassenden Rührautoklaven werden 60 g (=0,24 Mol) 1-Nitroanthrachinon, 60 ml Xylol, 220 ml Wasser, 22,5 g (=0,30 Mol) Calciumhydroxid und 30 ml (=0,28 Mol) 70%ige wäßrige Isopropylaminlösung eingefüllt. Der Autoklav wird druckdicht verschlossen und 30 Stunden auf 115° C erhitzt. Der Druck fällt dabei von anfänglich 2,9 auf 1,6 bar ab. Man läßt abkühlen, überführt das Reaktionsgemisch in einen Reaktionskolben, setzt 80 g (=1,5 Mol) Ammoniumchlorid zu und verkocht das Calciumnitrit (hierzu sind etwa 12 bis 15 Stunden erforderlich). Nach dem Abdestillieren des Xylol/Wasser-Gemisches wird das 1-Isopropyl-amino-anthrachinon abfiltriert, mit Wasser gewaschen und getrocknet.

Ausbeute: 63 g 1-Isopropylamino-anthrachinon (96- bis 97%ig) entsprechend einer Ausbeute von 96 bis 97% der Theorie.

In keinem Stadium des Herstellungsverfahrens sind Nitrosamine innerhalb der Nachweisgrenze von 1 ppm nachweisbar.


**Patentansprüche**

1. Verfahren zur Herstellung von 1-Alkylamino-anthrachinonen durch Aminolyse von 1-Nitroanthrachinonen mit Alkylaminen bei erhöhter Temperatur in Wasser und organischen, mit Wasser nicht mischbaren Lösungsmitteln in Gegenwart von Säurebindemitteln, dadurch gekennzeichnet, daß man als Säurebindemittel Calciumhydroxid verwendet.

2. Verfahren gemäß Anspruch 1, dadurch gekennzeichnet, daß man das Calciumhydroxid in Mengen von 1 bis 5 Äquivalenten je Mol 1-Nitroanthrachinon einsetzt.

3. Verfahren gemäß Ansprüchen 1 und 2, dadurch gekennzeichnet, daß man die Alkylamine in Mengen von 1 bis 1,5 Mol je Mol 1-Nitroanthrachinon anwendet.

4. Verfahren gemäß Ansprüchen 1 bis 3, dadurch gekennzeichnet, daß man die Alkylamine in Mengen von 1,05 bis 1,2 Mol je Mol 1-Nitroanthrachinon anwendet.

5. Verfahren gemäß Ansprüchen 1 bis 4, dadurch gekennzeichnet, daß man das nach beendeter Aminolyse anfallende Reaktionsgemisch so lange mit Ammoniumsalzen auf Rückflußtemperatur erwärmt, bis im Reaktionsgemisch kein Nitrit mehr nachweisbar ist.

6. Verfahren gemäß Anspruch 5, dadurch gekennzeichnet, daß man als Ammoniumsalze Salze solcher Säuren verwendet, die mit Calcium wasserlösliche Salze bilden.

7. Verfahren gemäß Ansprüchen 5 und 6, dadurch gekennzeichnet, daß man die Ammoniumsalze in mindestens äquivalenten Mengen zur angewendeten Menge Calciumhydroxid einsetzt.

8. Verfahren gemäß Ansprüchen 5 bis 7, dadurch gekennzeichnet, daß man 2 bis 6 Äquivalente Ammoniumsalze je Mol angewendeten Calciumhydroxids einsetzt.


**Claims**

1. Process for the preparation of 1-alkylamino-anthraquinones by aminolysis of 1-nitroanthra-quinones with alkylamines at elevated temperature in water and organic water-immiscible solvents, in the presence of acid-binding agents, characterised in that calcium hydroxide is used as the acid-binding agent.

2. Process according to Claim 1, characterised in that the calcium hydroxide is employed in quantities of from 1 to 5 equivalents per mol of 1-nitroanthraquinone.

3. Process according to Claims 1 and 2, characterised in that the alkylamines are used in quantities of from 1 to 1.5 mol per mol of 1-nitroanthraquinone.

4. Process according to Claims 1 to 3, characterised in that the alkylamines are used in quantities of from 1.05 to 1.2 mol per mol of 1-nitroanthraquinone.

5. Process according to Claims 1 to 4, characterised in that the reaction mixture produced after the end of the aminolysis is heated to the reflux temperature with ammonium salts until nitrite is no longer detectable in the reaction mixture.

6. Process according to Claim 5, characterised in that salts of those acids which form water-soluble salts with calcium are used as the ammonium salts.

7. Process according to Claims 5 and 6, characterised in that the ammonium salts are employed in quantities which are at least equivalent to the quantity of calcium hydroxide used.

8. Process according to Claims 5 to 7, characterised in that from 2 to 6 equivalents of ammonium salts are employed per mol of calcium hydroxide used.

## Revendications

1. Procédé de production de 1-alkylamino-anthraquinones par aminolyse de 1-nitro-anthraquinones avec des alkylamines à température élevée dans l'eau et dans des solvants organiques non miscibles à l'eau en présence d'accepteurs d'acides, caractérisé en ce qu'on utilise l'hydroxyde de calcium comme accepteur d'acide.

2. Procédé suivant la revendication 1, caractérisé en ce qu'on utilise l'hydroxyde de calcium en quantités de 1 à 5 équivalents par mole de 1-nitro-anthraquinone.

3. Procédé suivant les revendications 1 et 2, caractérisé en ce qu'on utilise les alkylamines en quantités de 1 à 1,5 mole par mole de 1-nitro-anthraquinone.

4. Procédé suivant les revendications 1 à 3, caractérisé en ce qu'on utilise les alkylamines en quantités de 1,05 à 1,2 mole par mole de 1-nitro-anthraquinone.

5. Procédé suivant les revendications 1 à 4, caractérisé en ce qu'on chauffe le mélange réactionnel obtenu une fois l'aminolyse terminée à la témperature de reflux avec des sels d'ammonium jusqu'à ce qu'on ne puisse plus déceler de nitrite dans le mélange réactionnel.

6. Procédé suivant la revendication 5, caractérisé en ce qu'on utilise comme sels d'ammonium des sels d'acides qui forment des sels hydrosolubles avec le calcium.

7. Procédé suivant les revendications 5 et 6, caractérisé en ce qu'on utilise les sels d'ammonium en quantités équivalant au moins à la quantité utilisée d'hydroxyde de calcium.

8. Procédé suivant les revendications 5 à 7, caractérisé en ce qu'on utilise 2 à 6 équivalents de sels d'ammonium par mole d'hydroxyde de calcium utilisé.